# EUROPÄISCHE PATENTSCHRIFT

(11) **EP 1 230 973 B1**
(45) Veröffentlichungstag und Bekanntmachung des Hinweises auf die Patenterteilung: **24.08.2005**
(21) Anmeldenummer: 02003326.2
(22) Anmeldetag: 13.02.2002
(51) Int. Cl.: B01J 8/00, B01D 46/04

(54) **Vorrichtung zum Behandeln von partikelförmigen Gut**
Particulate material processing apparatus
Dispositif pour le traitement de matière particulaire

(30) Priorität: 13.02.2001 DE 10107924
(43) Veröffentlichungstag der Anmeldung: 14.08.2002
(73) Patentinhaber: Hüttlin GmbH, 79585 Steinen (DE)
(72) Erfinder: Gross, Martin, 79585 Steinen (DE)
(74) Vertreter: Weller, Wolfgang

(56) Entgegenhaltungen:
- EP-A- 0 080 754
- EP-A- 0 841 095
- DE-A- 2 311 284
- DE-A- 3 008 481
- DE-C- 4 030 086
- US-A- 4 046 526

## Beschreibung

Die Erfindung betrifft eine Vorrichtung zum Behandeln von partikelförmigem Gut, mit einem Behälter, in dem eine Prozesskammer angeordnet ist, in der das zu behandelnde Gut von der Prozessluft durchströmt und dabei fluidisiert wird, mit einer in der Prozesskammer abstromseitig angeordneten Filtereinrichtung, die wenigstens ein Filterelement zum Entfernen von mitgerissenen Gutpartikeln aus der Prozessluft und eine Doppelventilanordnung zum Rückspülen des Filterelements mit einem Spülmedium aufweist, wobei jedes Ventil einen Ventilantrieb aufweist, und wobei in einem Filtermodus ein erstes Ventil geschlossen ist und einen gegenstromigen Durchtritt von Spülmedium sperrt und das zweite Ventil offen ist und einen Durchtritt von Prozessluft ermöglicht und in einem Spülmodus die Stellung der Ventile umgekehrt ist, wobei die Ventilantriebe außerhalb der Prozessgas führenden Gaswege und der Spülmedium führenden Gaswege angeordnet sind.

Eine derartige Vorrichtung ist z.B. aus der EP 0 080 754 A1 bekannt.

Eine ähnliche Vorrichtung ist aus der DE 40 30 086 C1 bekannt.

Solche Vorrichtungen finden beispielsweise Verwendung in der pharmazeutischen Industrie, etwa um Pulver mit einer Binderflüssigkeit zu granulieren oder Pulver und Granulate mit einer Lackschicht zu überziehen. Generell weisen bekannte Vorrichtungen dieser Art eine Prozeßkammer auf, in der ein eingebrachtes Gut über längere Zeit umgewälzt werden kann, z.B. durch Aufbau eines Wirbel- oder Fließbetts. In die Prozeßkammer wird hierzu von unten ein Prozeßgas eingeblasen, welches das eingebrachte Gut fluidisiert. Das Prozeßgas wird über eine abstromseitig angeordnete Filteranordnung abgeführt, an der mitgerissene Gutpartikel festgehalten werden. Über einen Gasauslaß verläßt das abgefilterte Prozeßgas die Vorrichtung und wird dann nach einer Reinigung und nachfolgenden Aufbereitung der Prozeßkammer wieder zugeführt.

Bekannte Filteranordnungen weisen üblicherweise mehrere Filterkerzen auf, die in den oberen Bereich der Prozeßkammer hineinragen und hindurchtretendes Prozeßgas mechanisch filtern. Jede Filterkerze besteht aus einem Filterkorb und einem darauf aufgezogenen Filtersack. Da vom Prozeßgas mitgerissene Gutpartikel Außenseiten der Filtersäcke nach relativ kurzer Zeit zusetzen, werden die Filterkerzen während des laufenden Betriebs der Vorrichtung mehrfach nacheinander von dem daran anhaftendem Staub befreit. Bei diesem Vorgang, der auch als Spülen bezeichnet wird, wird kurzzeitig die Strömungsrichtung durch die zu reinigende Filterkerze umgekehrt, indem die Abfuhr von Prozeßgas durch die Filterkerze unterbrochen und statt dessen gereinigtes und aufbereitetes Prozeßgas in der entgegengesetzten Richtung durch die Filterkerze hindurch zur Prozeßkammer geführt wird. Durch diesen abrupten Richtungswechsel wird der Filtersack der Filterkerze kurzzeitig aufgebläht, wodurch an seiner Außenseite haftende Gutpartikel abfallen.

Die eingangs genannte Vorrichtung nach der DE 40 30 086 C1 weist einen Behälter auf, in dem sich unterhalb einer Behälterdecke eine Gasverteilkammer befindet. Von der Gasverteilkammer, die mit einem Gaseinlaß zur Zufuhr von Prozeßgas versehen ist, geht ein zentrales Rohr ab, welches sich entlang einer Behälterlängsachse nach unten erstreckt. Über dieses zentrale Rohr wird während des Betriebs Prozeßgas von unten her in eine Prozeßkammer einleitet. Unterhalb der Gasverteilkammer befindet sich eine durch einen Zwischenboden abgetrennte und sich ringförmig um das zentrale Rohr erstreckende Gassammelkammer, die mit einem Gasauslaß verbunden ist. An der Unterseite der Gassammelkammer sind mehrere Filterkerzen lösbar befestigt, denen jeweils eine Doppelventilanordnung zur Richtungsumkehr des durch die jeweilige Filterkerze hindurchtretenden Gasstromes zugeordnet ist.

Jede Doppelventilanordnung weist ein erstes Ventil auf, das in dem Zwischenboden zwischen der Gasverteilkammer und der Gassammelkammer angeordnet ist. Von dem Ventilsitz dieses ersten Ventils erstreckt sich nach unten eine mit Hilfe eines Balges längenverstellbare Hülse, deren freies Ende einen ringförmigen Ventilkörper aufweist, wobei der dazu gehörende Ventilantrieb behälterfest innerhalb der Hülse angeordnet ist. Der ringförmige Ventilkörper läßt sich auf einen zweiten Ventilsitz aufsetzen, der die Gassammelkammer abstromseitig mit den Filterkerzen verbindet. Ist dieser zweite Ventilsitz offen und das erste Ventil geschlossen, so kann Prozeßgas durch das Innere der Filterkerze hindurch in die Gassammelkammer gelangen und über den Gasauslaß abgeführt werden. Wird der ringförmige Ventilkörper hingegen auf den zweiten Ventilsitz aufgesetzt und gleichzeitig das obere Ventil geöffnet, so kann Prozeßgas von der Gasverteilkammer durch die Hülse hindurch in die Filterkerze gelangen und das gewünschte Aufblähen des Filtersacks bewirken.

Nachteilig bei dieser bekannten Vorrichtung ist allerdings, daß die Reinigung der Gasverteil- und der Gassammelkammer sowie der Doppelventilanordnung relativ schwierig ist. Eine Reinigung ist deswegen erforderlich, da in derartigen Vorrichtungen unterschiedlichste Stoffe, darunter auch solche mit chemisch sehr aktiven oder sogar giftigen Bestandteilen, in voneinander unabhängigen Prozessen nacheinander verarbeitet werden. Daher müssen zwischen zwei Prozessen alle mit den Stoffen in Berührung kommende Teile der Vorrichtung sorgfältig gereinigt werden, damit Prozeßprodukte nicht durch in der Vorrichtung zurückgebliebene, noch aus dem vorherigen Prozeß stammende Rückstände verunreinigt werden.

Bei der vorstehend beschriebenen Vorrichtung lassen sich zur Reinigung die Filterkerzen abhängen und außerdem ein zweiter Zwischenboden, in dem die zweiten Ventilsitze gebildet sind, nach unten herausfahren, so daß die Hülsen mit den darin angeordneten Ventilen von unten her zugänglich werden. Die Reinigung dieser Bauteile ist aber dennoch zeitaufwendig, da die Gassammelkammer durch die herabhängenden Hülsen mit den daran ausgebildeten Balgen sehr zerklüftet ist. Die Gasverteilkammer ist zwar ebenfalls von oben nach Entfernen der Behälterdecke, die zu diesem Zweck als Schraubdeckel ausgeführt sein kann, zugänglich; auch dort ist jedoch eine Reinigung nur unter größerem Zeitaufwand durchführbar, da auch die Gasverteilkammer wegen der darin aufgehängten ersten Ventile ebenfalls sehr zerklüftet ist.

Aus der zuvor genannten EP 00 80 754 A1 ist nun eine Vorrichtung bekannt, bei der die Ventilantriebe außerhalb der Prozessgas führenden Gaswege und der Spülmedien führenden Gaswege angeordnet sind. Dies vereinfacht den Reinigungsprozess etwas, da dadurch die Ventilantriebe nicht mehr mit dem zu behandelnden Gut in Berührung kommen.

Bei dieser Ausführungsform sind jedoch die Ventilkörper noch über eine Ventilstange mit dem Antrieb verbunden. Dadurch ergeben sich auch in dieser Anordnung noch Ecken und Nischen, die ein Reinigen erschweren.

Es ist daher Aufgabe der vorliegenden Erfindung, eine Vorrichtung der eingangs genannten Art derart weiterzubilden, dass sich die Vorrichtung insgesamt und insbesondere deren Filter und Doppelventilanordnung leichter reinigen lässt.

Erfindungsgemäß wird die Aufgabe bei einer Vorrichtung der eingangs genannten Art dadurch gelöst, dass wenigstens einem Ventil ein Ventilkörper zugeordnet ist, dessen Stellung über eine nicht mit dem Ventilkörper verbundene Ventilstange veränderbar ist.

Diese Trennung von Ventilkörper und Ventilstange ermöglichst es, den Ventilkörper an einem Bauteil wie etwa einem Zwischenboden zu befestigen, das vor einer Reinigung der Kammern aus dem Inneren des Behälters ausgebaut werden kann. In das Behälterinnere ragt dann lediglich noch die Ventilstange, die nur wenig Platz einnimmt und einfach zu reinigen ist. Außerdem ist es möglich, einen Ventilantrieb zu verwenden, in den sich die Ventilstange vollständig einfahren läßt. Da der Ventilantrieb selbst außerhalb des Gehäuses angeordnet ist, ragt dann auch die Ventilstange bei einer Reinigung nicht mehr in die entsprechende Kammer hinein, wodurch die Reinigung nochmals erleichtert wird.

Da die Ventilstangen nicht fest mit den Ventilkörpern verbunden sind, können die Ventilkörper natürlich nur in eine Richtung von den Ventilstangen bewegt werden. In der entgegengesetzten Richtung müssen zusätzliche Kräfte wirken. In Betracht kommt hier z.B. der Anpreßdruck, der von einem durch den Ventilsitz strömenden Gas auf den Ventilkörper ausgeübt wird und das Ventil geöffnet hält, solange nicht die Ventilstange den Ventilkörper in den Ventilsitz preßt.

Bei einer bevorzugten Weiterbildung dieser Ausgestaltung ist der Ventilkörper jedoch elastisch an einem Ventilsitz befestigt.

Aufgrund der elastischen Befestigung nimmt der Ventilkörper somit auch ohne ein durch den Ventilsitz hindurchströmendes Gas eine definierte Stellung ein, die erst dann verlassen wird, wenn die Ventilstange auf dem Ventilkörper aufsitzt und diesen entgegen der elastischen Befestigung bewegt. In der Regel wird es so sein, daß die durch die elastische Befestigung bewirkte Normalstellung des Ventilkörpers die Offenstellung ist, so daß die Geschlossenstellung des Ventils erreicht wird, indem die Ventilstange den Ventilkörper in den Ventilsitz preßt.

Nach einem anderen Aspekt der Erfindung, der auch unabhängig von den außerhalb des Behälters angeordneten Ventilantrieben realisierbar ist, ist in dem Behälter eine Gasabzweigkammer angeordnet, die abstromseitig mit dem Filterelement verbunden ist, wobei mit dem ersten Ventil eine Verbindung zwischen der Gasabzweigkammer und eine Spülgaseinlaß und mit dem zweiten Ventil eine Verbindung zwischen der Gasabzweigkammer und einem Gasauslaß herstellbar ist.

Die Gasabzweigkammer stellt damit neben dem Filterelement den einzigen Gas führenden Bereich dar, der im zeitlichen Wechsel sowohl von gefilterten Prozeßgas als auch von Spülgas durchströmt wird. Dieses überraschend einfache Konstruktionsprinzip läßt die Notwendigkeit entfallen, durch bewegliche Teile wie Balge o.ä. eine direkte Verbindung zwischen dem Filterelement und einem Einlaß für Spülgas herzustellen.

Bei einer Weiterbildung dieser Ausgestaltung weist die Gasabzweigkammer für das erste und für das zweite Ventil jeweils einen Ventilsitz auf, von denen wenigstens einer seitlich an der Gasabzweigkammer angeordnet ist.

Ein solcher seitlich angebrachter Ventilsitz hat den Vorteil, daß er sich auf diese Weise nahe an der Behälterwandung anordnen läßt, so daß zur Betätigung durch einen außerhalb des Behälters angeordneten Ventilantriebes nur eine kurze Ventilstange erforderlich ist. Bei einer Reinigung behindert diese kurze Ventilstange, an der gegebenenfalls noch ein Ventilkörper befestigt ist, nur wenig.

Bei einer alternativen Weiterbildung dieser Ausgestaltung weist die Gasabzweigkammer für das erste und für das zweite Ventil jeweils einen Ventilsitz auf, die beide oberhalb der Gasabzweigkammer angeordnet sind.

Je nach der gesamten Geometrie des Behälterinneren kann eine derartige Anordnung der Ventile zweckmäßiger sein als eine Anordnung, bei der ein Ventilantrieb oberhalb der Gasabzweigkammer und einer seitlich davon angeordnet ist. Zwar wird dadurch die Zugänglichkeit des Raumes unmittelbar unterhalb der Behälterdecke eher verschlechtert, jedoch verbessert sich im Gegenzug die Zugänglichkeit der übrigen Bereiche des Behälterinneren nach Herausnehmen der Gasabzweigkammer und möglicher weitere Teile.

Bei einer anderen Weiterbildung dieser Ausgestaltung mündet der Spülgaseinlaß in eine Gasverteilkammer, die über das erste Ventil mit der Gasabzweigkammer verbindbar ist, und der Gasauslaß geht von einer Gassammelkammer ab, die über das zweite Ventil mit der Gasabzweigkammer verbindbar ist.

Dies hat den Vorteil, daß sich an die zentrale Gasverteilkammer und die zentrale Gassammelkammer mehrere Gasabzweigkammern über die Ventile anschließen lassen, wodurch sich die Konstruktion der Filter- und Doppelventilanordnung insgesamt deutlich vereinfacht.

Bei einer bevorzugten Weiterbildung dieser Ausgestaltung sind die Gasverteilkammer und die Gassammelkammer als zwei durch eine Abtrennung voneinander getrennte Teile eines Zwischenraumes ausgeführt, der von einer Decke des Behälteres und einem beabstandet darunter eingezogenen Zwischenboden gebildet wird.

Dies hat den Vorteil, daß sich die gesamte Bauhöhe des Behälters reduzieren läßt, da die Gasverteilkammer und die Gassammelkammer nicht übereinander, sondern in einer Ebene angeordnet sind.

Bei einer weiteren bevorzugten Ausgestaltung der Erfindung ist auch das erste Ventil außerhalb der Prozeßgas führenden Gaswege angeordnet, und das erste und das zweite Ventil sind in Reihe geschaltet.

Diese Maßnahme hat den erheblichen Vorteil, daß nicht nur die jeweiligen Ventilantriebe entsprechend der Erfindung außerhalb der Prozeßgaswege angeordnet ist, sondern auch das erste Ventil, das zur Zuführung des Spülmediums dient. Dabei sind erstes und zweites Ventil hintereinander geschaltet, so daß letztendlich nur noch ein einziger Ventilkörper, nämlich der Ventilkörper und dessen Steuerorgan des zweiten Ventils noch in den Prozeßgas führenden Gaswegen vorhanden sind. Dadurch ist weiter erheblich die Reinigung und auch die Handhabung vereinfacht.

In einer weiteren Ausgestaltung der Erfindung ist eine Ventilstange zur Veränderung der Stellung des zweiten Ventils als eine Spülmedium führende Stange ausgebildet, mittels der ein Spülmedium im Spülmodus durch den Ventilkörper des zweiten Venr tils hindurchführbar ist, und das erste Ventil steht mit dieser Stange in Verbindung.

Diese Maßnahme hat den Vorteil, daß das Spülmedium, sei es ein Spülgas oder auch eine Spülflüssigkeit durch den Ventilkörper des zweiten Ventils hindurchführbar ist, und zwar mittels dem Organ, das den Ventilkörper steuert.

Im Filtermodus ist dieser Ventilkörper in der offenen Position, läßt also den Durchtritt von Prozeßgas zu. Im Spülmodus ist dieser Ventilkörper geschlossen, das Steuerorgan, also die Stange zum Schließen dieses Ventilkörpers, dient aber gleichzeitig als Zuführleitung für das Spülmedium durch diesen Ventilkörper hindurch und die Stange ist dazu mit dem ersten Ventil verbunden.

In einer weiteren Ausgestaltung der Erfindung ist die Stellung des zweiten Ventils über eine nicht mit dessen Ventilkörper verbundene Ventilstange veränderbar, und die Ventilstange ist als eine Spülmedium führende Stange ausgebildet, durch die ein Spülmedium im Spülmodus durch den Ventilkörper hindurchführbar ist, und daß das erste Ventil mit dieser Stange in Verbindung steht.

In dieser Ausgestaltung ist ein erheblicher Vorteil darin zu erzielen, daß nicht nur die Möglichkeit besteht, das erste Ventil, wie zuvor erwähnt, außerhalb der Prozeßgas führenden Wege anzuordnen, sondern durch die Lösung von Ventilkörper und Ventilstange dieses Bauteil gelöst vom Ventilsitz auszugestalten, so daß weiter noch die Handhabbarkeit und Reinigbarkeit erhöht ist.

In einer weiteren Ausgestaltung der Erfindung ist die das Spülmedium führende Stange als Hohlstange ausgebildet.

Diese Maßnahme hat den Vorteil, daß ein einziges Bauteil, nämlich die Hohlstange als Steuerorgan für das zweite Ventil dient und zugleich als Zuführleitung für das Spülmedium herangezogen wird. Es wird also keine zusätzliche Leitung benötigt, sondern dazu wird der innere Hohlraum dieser Ventiltriebsteuerstange des zweiten Ventils herangezogen. Nimmt man beispielsweise eine Konstruktion heran, bei der diese ganzen Ventiltriebe an einem Deckel angebracht sind, kann dieser vom Behälterkörper abgehoben werden und es verbleiben innerhalb der Prozeßgas führenden Räumlichkeiten überhaupt nur noch pro Filterkerze ein einziger Ventilkörper, so daß die Reinigung weiter vereinfacht ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung der Ausführungsbeispiele und der Zeichnung. Darin zeigen:
- Fig. 1a: eine erste Vorrichtung in einem Längsschnitt;
- Fig. 1b: die Vorrichtung aus Fig. 1a in einem Schnitt entlang der Linie Ib-Ib;
- Fig. 2: die Vorrichtung aus den Figuren 1a und 1b mit herausgenommenen Filterplatinen, Gasabzweigelementen und Filterkerzen;
- Fig. 3a: eine zweite Vorrichtung in einem Längsschnitt;
- Fig. 3b: die Vorrichtung aus Fig. 3a in einem Schnitt entlang der Linie IIIb-IIIb;
- Fig. 4: die Vorrichtung aus den Figuren 3a und 3b mit herausgenommenen Filterplatinen, Gasabzweigelementen und Filterkerzen;
- Fig. 5a: eine dritte Vorrichtung in einem Längsschnitt;
- Fig. 5b: die Vorrichtung aus Fig. 5a in einem Schnitt entlang der Linie Vb-Vb;
- Fig. 6: die Vorrichtung aus den Figuren 5a und 5b mit herausgenommenen Filterplatinen, Gasabzweigelementen und Filterkerzen; und
- Fig. 7: eine vierte Vorrichtung in Längsschnitt, bei der auch das erste Ventil außerhalb der Prozeßgaswege angeordnet ist.

Die in den Fig. 1a - 2 und Fig. 5a - 6 dargestellten Vorrichtungen fallen nicht unter die Ansprüche.

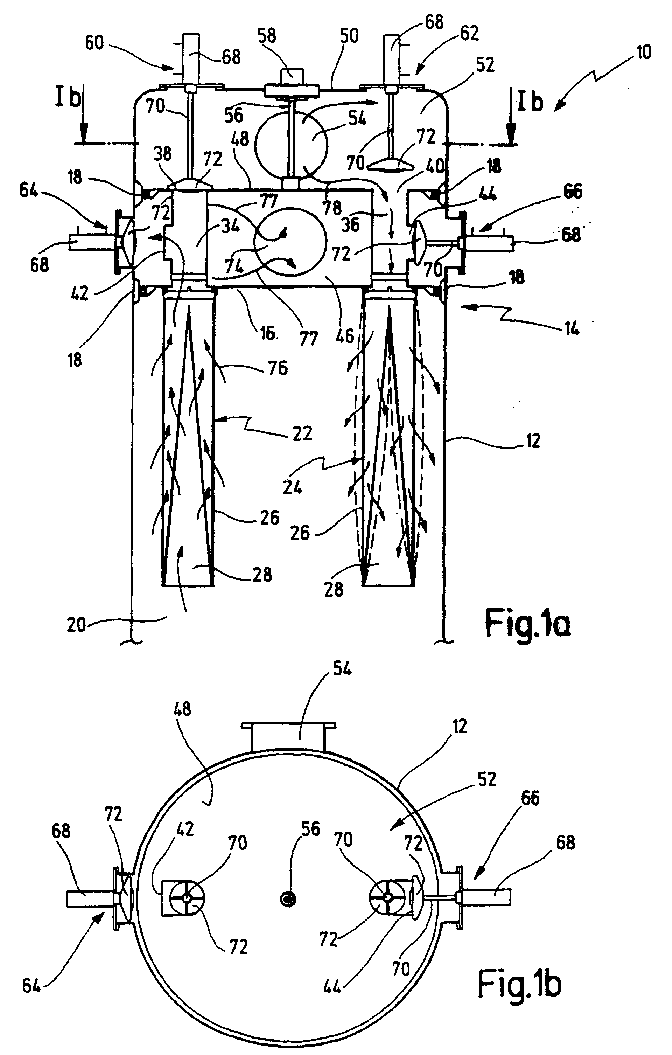

In den Fig. 1a und 1b ist ein oberer Teil einer Vorrichtung in einem Längsschnitt bzw. in einem Schnitt entlang der Linie Ib-Ib gezeigt und insgesamt mit 10 bezeichnet. Im Schnitt Ib-Ib sind zur Verdeutlichung Teile gezeigt, die streng genommen nicht erkennbar sein dürften.

Die Vorrichtung 10 weist einen im wesentlichen zylindrischen Behälter 12 auf, in dem eine insgesamt mit 14 bezeichnete Filtereinrichtung angeordnet ist. Die Filtereinrichtung 14 weist eine erste Filterplatine 16 mit einem umlaufenden Dichtungselement 18 auf, die in der Art eines Zwischenbodens lösbar in dem Behälter 12 befestigt ist.

Unterhalb der ersten Filterplatine 16 befindet sich eine Prozeßkammer 20, die seitlich von der zylindrischen Wandung des Behälter 12 und nach unten hin von einem - in Fig. 1a nicht dargestellten - konkaven Boden begrenzt wird. In dieser Prozeßkammer 20 wird in an sich bekannter Weise ein darin eingebrachtes Gut behandelt, z.B. beschichtet, granuliert, pelletiert oder dragiert. Dabei wird von unten ein Prozeßgas in die Prozeßkammer 20 eingeblasen, das das eingebrachte Gut fluidisiert und dann vom oberen, in Fig. 1a dargestellten Teil der Prozeßkammer 20 über die Filtereinrichtung 14 aus der Vorrichtung 10 abgeführt wird.

Die Filtereinrichtung 14 weist ferner zwei Filterkerzen 22 und 24 auf, die jeweils aus einem Filterkorb 26 und einem darauf aufgezogenen Filtersack 28 bestehen. Die beiden Filterkerzen 22, 24 sind an der Unterseite der ersten Filterplatine 16 aufgehängt und ragen dadurch in den oberen Teil der Prozeßkammer 20 hinein. Über Öffnungen 30 und 32 in der ersten Filterplatine 16 ist das Innere der Filterkerzen 22, 24 jeweils mit Gasabzweigkammern 34 bzw. 36 verbunden. Die Gasabzweigkammern 34, 36 haben eine im wesentlichen zylindrische Form und weisen an ihrer Oberseite Ventilsitze 38 bzw. 40 auf. Außerdem sind die Gasabzweigkammern 34, 36 an ihrer Seite jeweils mit einem kurzen Stutzen versehen, der in zwei weiteren Ventilsitzen 42 bzw. 44 mündet.

Die Gasabzweigkammern 34, 36 sind von einer Gassammelkammer 46 umgeben, die nach unten hin durch die erste Filterplatine 16 und nach oben hin durch eine zweite Filterplatine 48 begrenzt und nur durch die Gasabzweigkammern 34 und 36 durchsetzt ist. Zwischen der zweiten Filterplatine 48 und einer Decke 50 des Behälters 12 wird außerdem eine Gasverteilkammer 52 gebildet, die mit einem Anschlußstutzten 54 zur Zufuhr eines Spülgases versehen ist. Zur Stabilisierung der zweiten Filterplatine 48 ist diese an ihrer Oberseite mit einer Stange 56 versehen, die an einem in der Decke 50 angeordneten Befestigungselement 58 aufgehängt oder in sonstiger Weise lösbar befestigt ist.

Die beiden Ventilsitze 38, 40 sind Bestandteil zweier erster Ventile 60 und 62, mit deren Hilfe die Gasabzweigkammern 34, 36 unabhängig voneinander mit der Gasverteilkammer 52 verbunden werden können. Die beiden Ventilsitze 42 und 44 sind hingegen Bestandteil zweier zweiter Ventile 64 und 66, durch die die Gasabzweigkammern 34, 36 unabhängig voneinander mit der Gassammelkammer 46 verbunden werden können. Sowohl die beiden ersten Ventile 60, 62 als auch die beiden zweiten Ventile 64, 66 weisen jeweils einen Ventilantrieb 68 auf, der eine Ventilstange 70 antreibt. Durch die an den Ventilstangen 70 befestigten Ventilkörper 72 lassen sich die Ventilsitze 38, 40, 42 und 44 schließen.

Die Gassammelkammer 46 ist außerdem mit einem Gasauslaß 74 in Form eines weiteren Anschlußstutzens versehen, der unterhalb des Anschlußstutzens 54 für den Spülgaseinlaß angeordnet ist. Die Ventilantriebe 68 der ersten Ventile 60, 62 und der zweiten Ventile 64, 66 sind außerhalb des Behälters 12 angeordnet und über nicht näher dargestellte Steuerleitungen mit einer Prozeßsteuerung verbunden.

Die in Fig. 1a auf der linken Seite dargestellten ersten und zweiten Ventile 60 bzw. 64 befinden sich in einer Filter-Ventilstellung, in der die Verbindung von der Gasabzweigkammer 34 zur Gasverteilkammer 52 durch den Ventilkörper 72 unterbrochen ist, während die Verbindung zur Gassammelkammer 46 offen ist. In dieser Filter-Ventilstellung kann Prozeßgas aus der Prozeßkammer 20 durch den Filtersack 28 der Filterkerze 22 hindurchtreten, wobei vom Prozeßgas mitgerissene Gutpartikel an der Außenseite des Filtersacks 28 haften bleiben. Dies ist durch die Pfeile 76 angedeutet. Vom Inneren der Filterkerze 22 gelangt das Prozeßgas in die Gasabzweigkammer 34 und weiter durch den offenen Ventilsitz 42 in die Gassammelkammer 46. Von dort wird das nunmehr gefilterte Prozeßgas über den Gasauslaß 74 abgeführt (Pfeile 77). Um den Durchtritt des Prozeßgases durch den Filtersack 28 der Filterkerze 22 zu erleichtern, besteht zwischen dem Gasauslaß 74 und der Prozeßkammer 20 ein Druckgefälle, welches Prozeßgas in die Filterkerze 22 hineinsaugt.

Da sich der Filtersack 28 nach und nach auf seiner Außenseite mit Gutpartikeln zusetzt, wird die Strömungsrichtung durch den Filtersack in regelmäßigen zeitlichen Abständen umgekehrt. Die hierzu erforderliche Spül-Ventilstellung ist auf der rechten Seite der Fig. 1a für das erste Ventil 62 und das zweite Ventil 66 gezeigt. In dieser Spül-Ventilstellung ist das erste Ventil 62 geöffnet und das zweite Ventil 66 geschlossen. Dadurch kann Prozeßgas nicht mehr aus dem Inneren der Filterkerze 24 in die Gassammelkammer 46 gelangen und von dort über den Gasauslaß 74 abgesaugt werden. Statt dessen wird über den Anschlußstutzen 54 zugeführtes Spülgas, bei dem es sich um gereinigtes und aufbereitetes Prozeßgas handeln kann, von der Gasverteilkammer 52 in die Gasabzweigkammer 36 geleitet (Pfeil 78) und gelangt von dort in das Innere der Filterkerze 24. Das unter Druck stehende Spülgas führt im Inneren der Filterkerze 24 dazu, daß sich der Filtersack 28 stoßartig aufbläht, wobei an dessen Außenseite haftender Staub abfällt. In Fig. 1a ist dieser Zustand durch eine gestrichelt gezogene Kontur angedeutet. Das Spülgas strömt dann durch die nunmehr wieder vollständig geöffneten Poren des Filtersacks 28 in die Prozeßkammer 20. Vorzugsweise wird die Filtereinrichtung 14 so betrieben, daß zu jedem Zeitpunkt höchstens eine der beiden Filterkerzen 22, 24 durch Überführen der entsprechenden Ventile in die Spül-Ventilstellung gereinigt wird.

Zur Reinigung der Vorrichtung 10 wird die Filtereinrichtung 14 aus dem Inneren des Behälter 12 ausgebaut. Hierzu werden zunächst die Filterkerzen 22, 24 ausgehängt und die erste Filterplatine 16 gelöst. Durch Lösen des Befestigungselements 58 wird die Stange 56 freigegeben, mit der die zweite Filterplatine 48 an der Decke 50 des Behälters 12 befestigt ist. Nun lassen sich die beiden Filterplatinen 16 und 48 so weit nach unten verfahren, daß der dadurch freigegebene Raum im Behälter 12 durch eine (Deckel-)Tür o.ä. zugänglich wird.

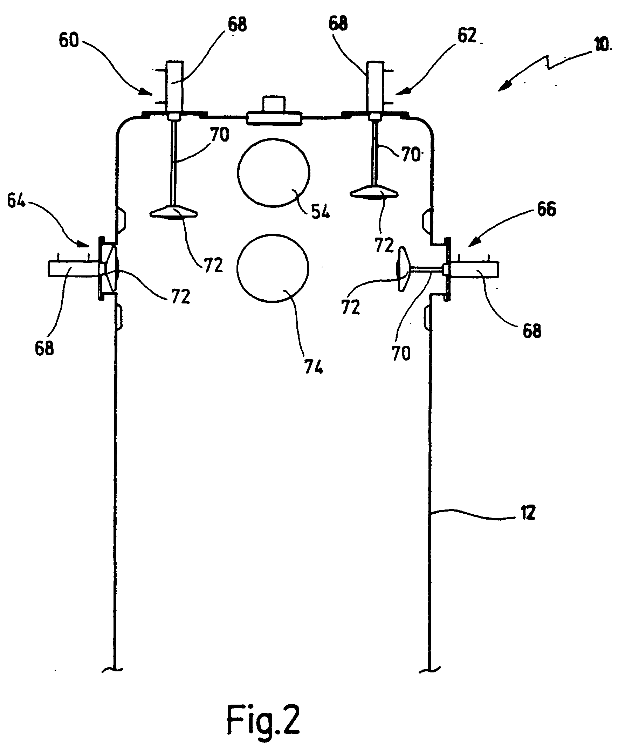

In Fig. 2 ist die Vorrichtung 10 aus der Fig. 1a in diesem Zustand, d.h. mit herabgefahrenen Filterplatinen 16 und 48 gezeigt. Wie dort gut zu erkennen ist, ist der nun freigegebene Innenraum im Behälter 12 gut zugänglich, da lediglich die Ventilstangen 70 mit den daran befestigten Ventilkörpern 72 in den Innenraum hineinragen. Die Ventilantriebe 68 hingegen befinden sich außerhalb des Behälters 12, so daß weder die Ventilantriebe 68 selbst noch für deren Befestigung im Inneren des Behälters 12 erforderlichen Trägerstrukturen die Reinigung erschweren.

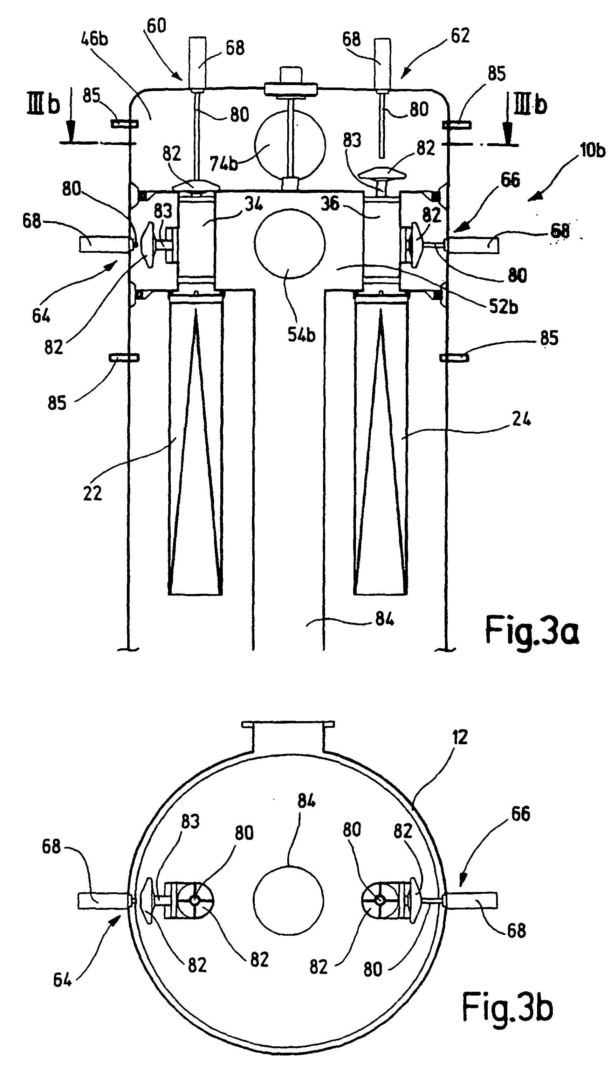

Die Figuren 3a und 3b zeigen eine zweite Vorrichtung in einem Längsschnitt bzw. in einem Schnitt entlang der Linie IIIb-IIIb. Die dort insgesamt mit 10b bezeichnete Vorrichtung gleicht weitgehend der Vorrichtung 10 aus den Figuren 1a und 1b, weswegen gleiche Teile mit gleichen Bezugsziffern bezeichnet sind. Abweichend von der Vorrichtung 10 weist die Vorrichtung 10b jedoch Ventilstangen 80 auf, die nicht mit Ventilkörpern 82 verbunden sind. Die Ventilkörper 82 sind vielmehr mit Hilfe elastischer Federelemente 83 an den an den Gasabzweigkammern 34, 36 ausgebildeten Ventilsitzen 38, 40, 42 und 44 elastisch befestigt. Die Federelemente 83 bewirken, daß die Ventile 60, 62, 64 und 66 geöffnet sind, sofern die Ventilkörper 82 nicht von oben über die Ventilstangen 80 in den entsprechenden Ventilsitz gedrückt werden, wie dies in Fig. 3a bei den Ventilen 60 und 66 der Fall ist.

Die Vorrichtung 10b weist außerdem eine Gassammelkammer 46b auf, die zwischen der Decke 50 des Behälters 12 und einer Gasverteilkammer 52b angeordnet ist und einen Anschlußstutzen 74b aufweist. Gegenüber der Vorrichtung 10 aus den Fig. 1a und 1b sind somit bei der Vorrichtung 10b die Gassammelkammer und die Gasverteilkammer räumlich vertauscht. Von der Gasverteilkammer 52b, die mit einem Anschlußstutzen 54b versehen ist, geht ein zentrales Rohr 84 ab, das sich entlang einer Längsachse des Behälters 12 nach unten erstreckt. Über den Anschlußstutzen 54b wird Prozeßgas in die Gasverteilkammer 52b geführt, welches über das Rohr 84 nach unten geleitet und von unten her in die Prozeßkammer 20 eingeblasen wird. Als Spülgas wird bei der Vorrichtung 10b somit Prozeßgas verwendet, welches durch Öffnen der Ventile 64 und 66 in die Gasabzweigkammern 34 bzw. 36 eingelassen werden kann. Aufgrund der vertauschten Anordnung der Gassammelkammer 46b und der Gasverteilkammer 54b nehmen die Ventile 60, 64 und 62, 66 in der Spül-Ventilstellung die Filter-Ventilstellung aus Fig. 1a ein und umgekehrt.

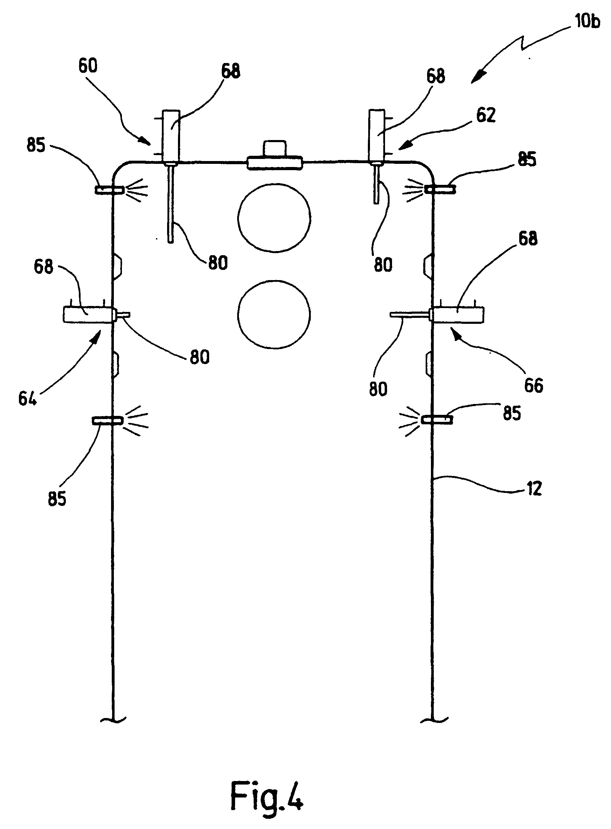

Das Rohr 84 kann gemeinsam mit den Filterplatinen 16 und 48 vor dem Reinigen des Behälterinneren nach unten verfahren werden. Die an den Gasabzweigkammern 34, 36 befestigten Ventilkörper 82 werden dabei mit in dem Behälter 12 nach unten gefahren. Dieser Zustand ist in Fig. 4 gezeigt, wobei erkennbar ist, daß nunmehr lediglich die Ventilstangen 80 in das Innere des Behälters 12 hineinragen, wodurch die Zugänglichkeit weiter verbessert wird. In der Behälterwandung angeordnete Sprühdüsen 85 ermöglichen eine selbstätige CIP-Reinigung des Behälterinneren (CIP, cleaning in place).

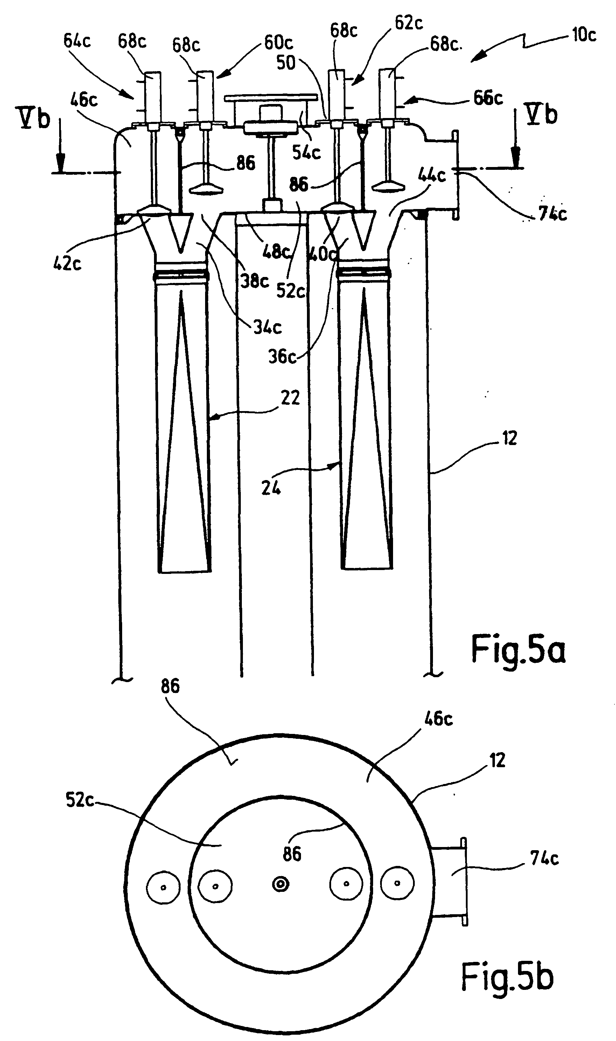

Die Figuren 5a und 5b zeigen eine dritte Vorrichtung, die insgesamt mit 10c bezeichnet ist. Die Vorrichtung 10c unterscheidet sich von der in den Figuren 1a und 1b gezeigten Vorrichtung 10 im wesentlichen dadurch, daß die Gassammelkammer 46c und die Gasverteilkammer 52c in einer Ebene unterhalb der Decke 50 des Behälters 12 angeordnet sind. In dem zwischen der Decke 50 und einer Filterplatine 48c gebildeten Zwischenraum ist eine hülsenförmige Wand 86 konzentrisch zur Längsachse des Behälters 12 eingezogen. Der von der Wand 86 nach innen abgegrenzte Teil bildet die Gasverteilkammer 52c, über deren nach oben weisenden Stutzen 54c unter Druck stehendes Spülgas eingeleitet werden kann. Der ringförmige Bereich zwischen der Wand 86 und dem Behälter 12 bildet die Gassammelkammer 46c, die mit einem seitlich angeordneten, als Gasauslaß dienenden Stutzen 74c versehen ist.

Die Gasabzweigkammern 34c und 36c haben bei der Vorrichtung 10c eine Y-förmige Gestalt, wobei jeweils an den Enden der beiden Schenkeln des Y Ventilsitze 38c, 40c, 42c und 44c gebildet sind, durch die sich bei geöffneten Ventilen 60c, 62c, 64c und 66c eine Verbindung zwischen den Gasabzweigkammern 34c, 36c einerseits und der Gassammelkammer 46c und der Gasverteilkammer 52c andererseits herstellen läßt. Da die Gassammelkammer 46c und die Gasverteilkammer 52c nunmehr in einer Ebene unterhalb der Decke 50 angeordnet sind, ist es bei der Vorrichtung 10c möglich, sämtliche Ventile 60c, 62c, 64c und 66c vertikal anzuordnen, so daß die Ventilantriebe 68c außerhalb der Decke 50 nach oben weisen.

An der Unterseite der Gasverteilkammer 52c kann sich ein nach unten führendes Rohr anschließen, ähnlich wie dies für die Vorrichtung 10b in den Fig. 3a und 3b gezeigt ist. Falls ein solches Rohr nicht vorgesehen ist, so können außerdem die Gasverteilkammer 52c und die Gassammelkammer 46c auch räumlich vertauscht angeordnet sein. Selbstverständlich können auch bei der Vorrichtung 10c eine, mehrere oder alle Ventilkörper elastisch an den Ventilsitzen befestigt sein, wie dies für die Vorrichtung 10b in den Fig. 3a und 3b gezeigt ist.

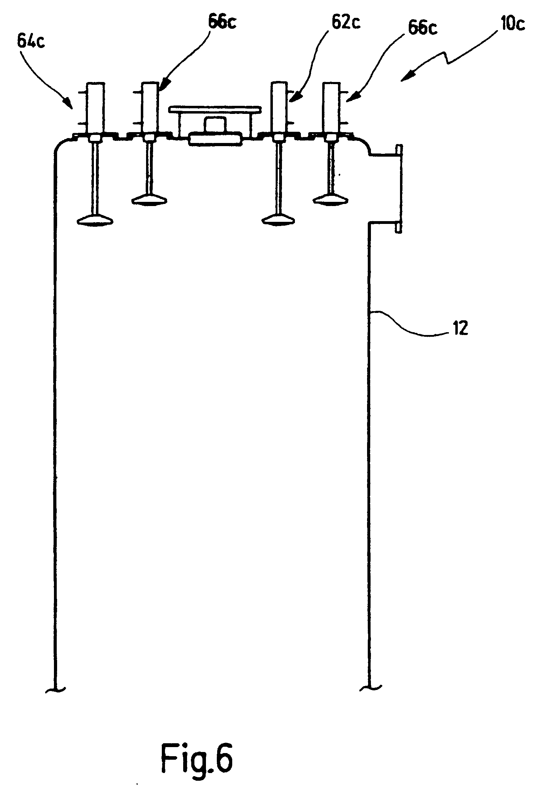

Fig. 6 zeigt die Vorrichtung 10c aus den Fig. 5a und 5b, wobei die Filterkerzen 22, 24 sowie die Filterplatine 48c mit der darauf befestigten Wand 86 herabgelassen sind. Aufgrund der vertikal angeordneten Ventile 60c, 62c, 64c und 66c ragen keine Bauteile von der Seite her in das Innere des Behälters 12 hinein.

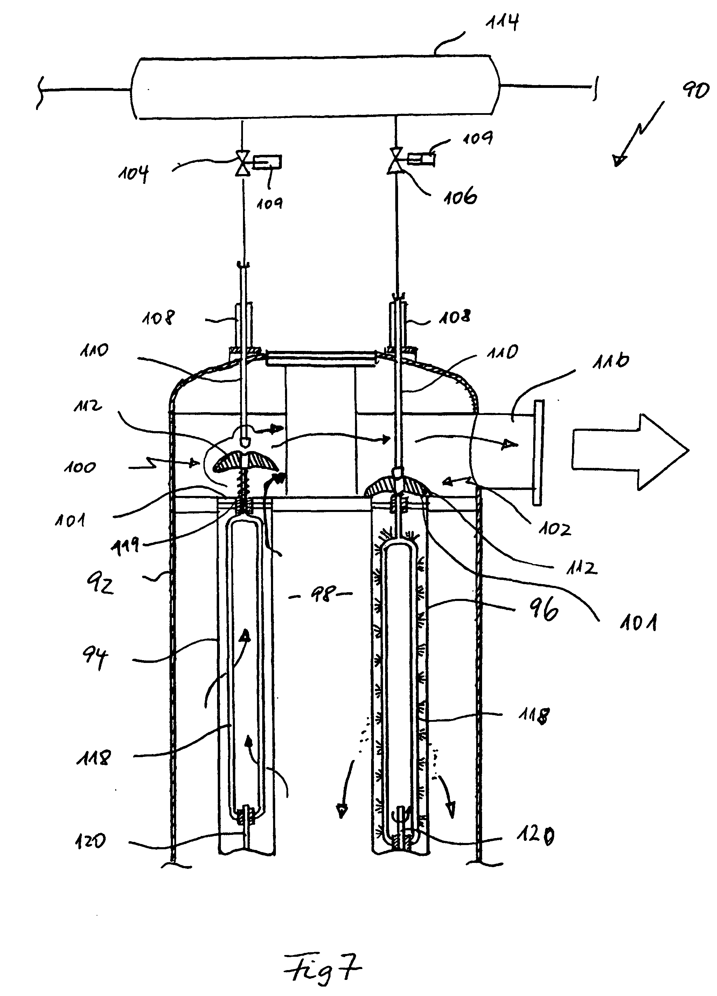

Bei der in Fig. 7 dargestellten vierten Vorrichtung ist diese in der Gesamtheit mit der Bezugsziffer 90 versehen.

Auch bei der Vorrichtung 90 ist ein Behälter 92 vorgesehen, in dessen Prozeßkammer 98 abstromseitig mehrere Filterkerzen 94, 96 von einem die Prozeßkammer 98 abschließenden Boden abhängen. Über dem Boden ist eine hier nicht näher bezeichnete Gassammelkammer angeordnet, in der die durch die Filterkerzen 94, 96 durchgetretenen Prozeßluftmengen gesammelt und einem Gasauslaß 116 zugeführt werden.

Jede Filterkerze 94 bzw. 96 ist, wie zuvor beschrieben, mit einem zweiten Ventil 100 bzw. 102 versehen, das dazu dient, eine Öffnung 101 zum Durchtritt von Prozeßgas zu schließen bzw. zu öffnen, wie das in Fig. 7 bei der linken Filterkerze 94 angedeutet ist, die also im Filtermodus arbeitet.

In Fig. 7 auf der rechten Seite ist in Zusammenhang mit der Filterkerze 96 der Spülmodus dargestellt, d.h. das zweite Ventil 102 verschließt die Durchtrittsöffnung 101, so daß keine Prozeßluft durchtreten kann.

Das Spülmedium wird durch eine als Hohlstange ausgebildete Ventilstange 110 zugeführt, die von den jeweils außerhalb des Behälters 22 angeordneten Ventilantrieben 108 bewegt wird.

Der jeweilige Ventilkörper 112 ist als ein etwa tellerförmiger elastischer Ventilkörper ausgebildet, der mittig mit einer durchgehenden Öffnung versehen ist, die auf Seiten der jeweiligen Filterkerze 94 bzw. 96 mit einem geschlossenen Hohlrohrbügel 118 in Verbindung steht. Um einen obigen hochstehenden und hier nicht näher bezeichneten Rohrabschnitt des Rohrbügels 118 ist eine vorgespannte Feder 119 gelegt, die den Ventilkörper 112 des zweiten Ventils 100, wenn die Ventilstange 110 über den Ventilantrieb 108 zurückgezogen ist, in die in Fig. 7 auf der linken Seite dargestellte angehobene Position drückt.

Wie aus Fig. 7 auf der linken Seite zu entnehmen ist, ist der Ventilantrieb 108 so ausgebildet, daß die Ventilstange 110 nicht fest mit dem entsprechenden Ventilkörper 112 verbunden ist.

Die Ventilstange 110 reicht durch den Ventilantrieb 108 hindurch und ist über eine flexible Leitung mit dem ersten Ventil 104 verbunden, das wiederum mit einem Spülbehälter 114 verbunden ist. Ein Ventilantrieb 109 steuert die Stellung des ersten Ventils 104.

Entsprechendes gilt auch für die mit der Filterkerze 96 verbundene Doppelventilanordnung.

Soll das zweite Ventil 100 von dem in Fig. 7 auf der linken Seite dargestellten Filtermodus in den Spülmodus umgeschaltet werden, wird der Ventilantrieb 108 betätigt und die Ventilstange 110 wird nach unten verfahren, trifft auf den Ventilkörper 112 und drückt diesen gegen die Kraft der Feder 119 samt dem unterhalb des Ventilkörpers anhängigen Rohrbügel 118 so weit nach unten, bis der Ventilkörper 112 die Öffnung 101 verschlossen hat.

Nunmehr wird das erste Ventil 104 über dessen Ventilantrieb 109 geöffnet und ein Spülmedium, beispielsweise Spülgas aus dem Spülbehälter 114 zugeführt.

Das Spülgas wird nun durch die als Hohlstange ausgebildete Ventilstange 110 sowohl durch den Ventilantrieb 108 als auch durch den Ventilkörper 110 hindurchgeführt und über unzählige kleine Öffnungen in dem Rohrbügel 118 ausgepreßt. Dadurch wird dann die Filterkerze 96 von innen druckstoßartig mit Spülgas beaufschlagt, so daß dann von außen anhaftende aus der Prozeßluft ausgefilterte Feinteile abfallen. Zur Erhöhung der Reinigungswirkung kann der Rohrbügel 118 sich noch zusätzlich drehen, wobei dies durch einen Führungsstab 120 geführt wird.

Im Gasbetrieb wird aus dem Spülbehälter 114 periodisch Spülgas stoßweise zugeführt, um die jeweilige Filterkerze von anhaftendem ausgefiltertem Staub freizublasen.

Beim Reinigen der Vorrichtung nach Ende eines Prozeßdurchganges kann in den Spülbehälter 114 auch eine Spülflüssigkeit eingeführt werden, um die Filterkerze zu reinigen.

Diese Maßnahme hat den erheblichen Vorteil, daß sowohl im Gasbetriebsmodus als auch im Reinigungsmodus über dieselbe Doppelventilanordnung auch ein effektives cleaning-in-place durchgeführt werden kann.

Bei dieser Ausgestaltung sind nicht nur sämtliche Ventilantriebe, sondern auch das erste Ventil zum Steuern des Spülmediums außerhalb der Prozeßgas führenden Gaswege angeordnet, so daß eine besonders einfache und effektive Reinigung sowohl während des Gasbetriebes als auch während einer nachfolgenden Reinigung durchgeführt werden kann.

## Patentansprüche

1. Vorrichtung zum Behandeln von partikelförmigem Gut, mit einem Behälter (12, 92), in dem eine Prozesskammer (20, 98) angeordnet ist, in der das zu behandelnde Gut von der Prozessluft durchströmt und dabei fluidisiert wird, mit einer in der Prozesskammer (20, 98) abstromseitig angeordneten Filtereinrichtung (14), die wenigstens ein Filterelement (22, 24, 94, 96) zum Entfernen von mitgerissenen Gutpartikeln aus der Prozessluft und eine Doppelventilanordnung (60, 62; 64, 66; 100, 102; 104, 106) zum Rückspülen des Filterelements (22, 24, 94, 96) mit einem Spülmedium aufweist, wobei jedes Ventil (60, 62, 64, 66, 100, 102, 104) einen Ventilantrieb (68, 108, 109) aufweist, und wobei in einem Filtermodus ein erstes Ventil (60, 104, 106) geschlossen ist und einen gegenstromigen Durchtritt von Spülmedium sperrt und das zweite Ventil (64, 100, 102) offen ist und einen Durchtritt von Prozessluft ermöglicht und in einem Spülmodus die Stellung der Ventile (62, 66, 100, 102, 104, 106) umgekehrt ist, wobei die Ventilantriebe (68, 108, 109) außerhalb der Prozessgas führenden Gaswege (34, 36, 46) und der Spülmedium führenden Gaswege (52,) angeordnet sind, **dadurch gekennzeichnet, dass** wenigstens einem Ventil (60, 62, 64, 66, 100, 102) ein Ventilkörper (82, 112) zugeordnet ist, dessen Stellung über eine nicht mit dem Ventilkörper (82, 112) verbundene Ventilstange (80, 110) veränderbar ist.

2. Vorrichtung nach Anspruch 1, **dadurch gekennzeichnet, dass** der Ventilkörper (82) elastisch an einem Ventilsitz (38, 40, 42, 44) befestigt ist.

3. Vorrichtung nach einem der Ansprüche 1 oder 2, **dadurch gekennzeichnet, dass** in dem Behälter (12) eine Gasabzweigkammer (34, 36) angeordnet ist, die abstromseitig mit dem Filterelement (22, 24) verbunden ist, und dass mit dem ersten Ventil (60, 62) eine Verbindung zwischen der Gasabzweigkammer (34, 36) und einem Spülgaseinlass (54) und mit dem zweiten Ventil (64, 66) eine Verbindung zwischen der Gasabzweigkammer (34, 36) und einem Gasauslass (74) herstellbar ist.

4. Vorrichtung nach Anspruch 3, **dadurch gekennzeichnet, dass** das erste und das zweite Ventil (60, 62, 64, 66) jeweils einen Ventilsitz (38, 40, 42, 44) aufweist, von denen wenigstens einer (42, 44) seitlich an der Gasabzweigkammer (34, 36) angeordnet ist.

5. Vorrichtung nach Anspruch 3, **dadurch gekennzeichnet, dass** das erste und das zweite Ventil (60, 62, 64, 66) jeweils einen Ventilsitz aufweisen, die beide oberhalb der Gasabzweigkammer (38c, 40c, 42c, 44c) angeordnet sind.

6. Vorrichtung nach einem der Ansprüche 3 bis 5, **dadurch gekennzeichnet, dass** der Spülgaseinlass (54) in eine Gasverteilkammer (52) mündet, die über das erste Ventil (60, 62) mit der Gasabzweigkammer (34, 36) verbindbar ist, und dass der Gasauslass (74) von einer Gassammelkammer (46) abgeht, die über das zweite Ventil (64, 66) mit der Gasabzweigkammer (34, 36) verbindbar ist.

7. Vorrichtung nach Anspruch 6, **dadurch gekennzeichnet, dass** die Gasverteilkammer (52e) und die Gassammelkammer (46e) als zwei durch eine Abtrennung (86) voneinander getrennte Teile eines Zwischenraumes ausgeführt sind, der von einer Decke (50) des Behälters (12) und einem beabstandet darunter angeordneten eingezogenen Zwischenboden (48c) gebildet wird.

8. Vorrichtung nach Anspruch 1, **dadurch gekennzeichnet, dass** das erste Ventil (104, 106) ebenfalls außerhalb der Prozessgas führenden Gaswege angeordnet ist und dass erstes Ventil (104, 106) und zweites Ventil (100, 102) in Reihe geschaltet sind.

9. Vorrichtung nach Anspruch 8, **dadurch gekennzeichnet, dass** eine Ventilstange (110) zur Veränderung der Stellung des zweiten Ventils (100, 102) als eine Spülmedium führende Stange ausgebildet ist, mittels der das Spülmedium im Spülmodus durch den Ventilkörper (112) des zweiten Ventils (100, 102) hindurchführbar ist, und dass das erste Ventil (104, 106) mit der das Spülmedium führenden Stange in Verbindung steht.

10. Vorrichtung nach Anspruch 8, **dadurch gekennzeichnet, dass** die Stellung des zweiten Ventils (100, 102) über eine nicht mit dessen Ventilkörper (112) verbundene Ventilstange (110) veränderbar ist, dass diese Ventilstange als eine das Spülmedium führende Stange ausgebildet ist, mittels der das Spülmedium im Spülmodus durch den Ventilkörper (112) hindurchführbar ist, und dass das erste Ventil (104, 106) mit der das Spülmedium führenden Stange in Verbindung steht.

11. Vorrichtung nach Anspruch 9 oder 10, **dadurch gekennzeichnet, dass** die das Spülmedium führende Stange als Hohlstange ausgebildet ist.

## Claims

1. Particulate material processing apparatus, having a container (12, 92) in which a process chamber (20, 98) is arranged, in which process chamber (20, 98) process air flows through the material to be processed and the material is fluidized, having a filtering device (14) which is arranged in the process chamber (20, 98) on the outflow side and has at least one filter element (22, 29, 94, 96) for removing entrained material particles from the process air and a double valve arrangement (60, 62; 64, 66; 100, 102; 104, 106) for the back flushing of the filter element (22, 24, 94, 96) with a flushing medium, each valve (60, 62, 64, 66, 100, 102, 104) having a valve drive (68, 108, 109), and a first valve (60, 104, 106) being closed in a filtering mode and preventing flushing medium from passing through in the counterflow direction, and the second valve (64, 100, 102) opening and allowing process air to pass through, and the position of the valves (62, 66, 100, 102, 104, 106) being reversed in a flushing mode, the valve drives (68, 108, 109) being arranged outside the gas paths (34, 36, 46) directing process gas and the gas paths (52) directing flushing medium, **characterized in that** a valve body (82, 112) is assigned to at least one valve (60, 62, 64, 66, 100, 102), and the position of this valve body (82, 112) can be changed via a valve rod (80, 110) which is not connected to the valve body (82, 112).

2. Apparatus according to Claim 1, **characterized in that** the valve body (82) is fastened elastically to a valve seat (38, 40, 42, 44).

3. Apparatus according to either of Claims 1 and 2, **characterized in that** a gas branch chamber (34, 36) is arranged in the container (12) and is connected to the filter element (22, 24) on the outflow side, and **in that** a connection between the gas branch chamber (34, 36) and a flushing gas inlet (54) can be produced with the first valve (60, 62), and a connection between the gas branch chamber (34, 36) and a gas outlet (74) can be produced with the second valve (66, 66).

4. Apparatus according to Claim 3, **characterized in that** the first and the second valve (60, 62, 64, 66) each have a valve seat (38, 40, 42, 44), of which at least one (42, 44) is arranged laterally on the gas branch chamber (34, 36).

5. Apparatus according to Claim 3, **characterized in that** the first and the second valve (60, 62, 64, 66) each have a valve seat, which valve seats are both arranged above the gas branch chamber (38c, 40c, 42c, 44c).

6. Apparatus according to one of Claims 3 to 5, **characterized in that** the flushing gas inlet (54) opens into a gas distribution chamber (52) which can be connected to the gas branch chamber (34, 36) via the first valve (60, 62), and **in that** the gas outlet (74) branches off from a gas collecting chamber (46) which can be connected to the gas branch chamber (34, 36) via the second valve (64, 66).

7. Apparatus according to Claim 6, **characterized in that** the gas distribution chamber (52c) and the gas collecting chamber (46c) are designed as two parts of an intermediate space which are separated from one another by a partition (86), the intermediate space being formed by a top (50) of the container (12) and by a drawn-in intermediate bottom (48c) arranged at a distance below said top (50).

8. Apparatus according to Claim 1, **characterized in that** the first valve (104, 106) is likewise arranged outside the gas paths directing process gas, and **in that** the first valve (104, 106) and the second valve (100, 102) are connected in series.

9. Apparatus according to Claim 8, **characterized in that** a valve rod (110) for changing the position of the second valve (100, 102) is designed as a rod which directs flushing medium and by means of which the flushing medium, in the flushing mode, can be passed through the valve body (112) of the second valve (100, 102), and **in that** the first valve (104, 106) is connected to the rod directing the flushing medium.

10. Apparatus according to Claim 8, **characterized in that** the position of the second valve (100, 102) can be changed via a valve rod (110) which is not connected to its valve body (112), **in that** this valve rod is designed as a rod which directs the flushing medium and by means of which the flushing medium, in the flushing mode, can be passed through the valve body (112), and **in that** the first valve (104, 106) is connected to the rod directing the flushing medium.

11. Apparatus according to Claim 9 or 10, **characterized in that** the rod directing the flushing medium is designed as a hollow rod.

## Revendications

1. Dispositif de traitement d'un produit en forme de particules, comportant un récipient (12, 92) dans lequel est disposée une chambre de processus (20, 98) dans laquelle le produit à traiter est traversé par l'air de processus et y est fluidisé, comportant un dispositif de filtrage (14) disposé côté aval dans la chambre de processus (20, 98) lequel comporte au moins un élément de filtrage (22, 24, 94, 96) pour éliminer, de l'air de processus, les particules du produit entraînées, ainsi qu'un agencement à deux soupapes (60, 62; 64, 66 ; 100, 102 ; 104, 106) pour le rétro-lavage de l'élément de filtrage (22, 24, 94, 96) avec un fluide de lavage, chaque soupape (60, 62, 64, 66, 100, 102, 104) comportant un dispositif d'actionnement de soupape (68, 108, 109), et dans un mode de filtrage une première soupape (60, 104, 106) est fermée et ferme un passage à contre-courant du fluide de lavage, et la deuxième soupape (64, 100, 102) est ouverte et permet le passage de l'air de processus, et dans un mode de lavage la position des soupapes (62, 66, 100, 102, 104, 106) est inversée, les dispositifs d'actionnement de soupape (68, 108, 109) étant disposés à l'extérieur des voies de gaz (34, 36, 46) conduisant le gaz de processus et des voies de gaz (52) conduisant le fluide de lavage, **caractérisé en ce qu'**à au moins une soupape (60, 62, 64, 66, 100, 102) est associé un corps de soupape (82, 112) dont la position peut être modifiée par une tige de soupape (80, 110) non reliée au corps de soupape (82, 112).

2. Dispositif selon la revendication 1, **caractérisé en ce que** le corps de soupape (82) est fixé élastiquement sur un siège de soupape (38, 40, 42, 44).

3. Dispositif selon l'une des revendications 1 ou 2, **caractérisé en ce que** dans le récipient (12) est disposée une chambre de départ de gaz (34, 36) qui est reliée côté aval à l'élément de filtrage (22, 24), et **en ce qu'**avec la première soupape (60, 62) on peut réaliser une liaison entre la chambre de départ de gaz (34, 36) et une entrée de gaz de lavage (54) et, avec la deuxième soupape (64, 66), on peut réaliser une liaison entre la chambre de départ de gaz (34, 36) et une sortie de gaz (74).

4. Dispositif selon la revendication 3, **caractérisé en ce que** la première et la deuxième soupape (60, 62, 64, 66) comportent chacune un siège de soupape (38, 40, 42, 44) dont au moins un (42, 44) est disposé sur le côté de la chambre de départ de gaz (34, 36).

5. Dispositif selon la revendication 3, **caractérisé en ce que** la première et la deuxième soupape (60, 62, 64, 66) présentent chacune un siège de soupape qui sont disposés tous deux au-dessus de la chambre de départ de gaz (38c, 40c, 42c, 44c).

6. Dispositif selon l'une des revendications 3 à 5, **caractérisé en ce que** l'entrée de gaz de lavage (54) débouche dans une chambre de distribution de gaz (52) qui peut être reliée, par la première soupape (60, 62), à la chambre de départ de gaz (34, 36) et **en ce que** la sortie de gaz (74) part d'une chambre de collecte de gaz (46) qui peut être reliée, par la deuxième soupape (64, 66), à la chambre de départ de gaz (34, 36).

7. Dispositif selon la revendication 6, **caractérisé en ce que** la chambre de distribution de gaz (52e) et la chambre de collecte de gaz (46e) sont réalisées comme deux parties, séparées l'une de l'autre par une cloison (86), d'un espace intermédiaire qui est formé par un couvercle (50) du récipient (12) et un fond intermédiaire (48c) en retrait, disposé au-dessous à distance.

8. Dispositif selon la revendication 1, **caractérisé en ce que** la première soupape (104, 106) est disposée également à l'extérieur des voies de gaz conduisant le gaz de processus, et **en ce que** la première soupape (104, 106) et la deuxième soupape (100, 102) sont montées en série.

9. Dispositif selon la revendication 8, **caractérisé en ce qu'**une tige de soupape (110) est réalisée, pour modifier la position de la deuxième soupape (100, 102), comme une tige conduisant le fluide de lavage, au moyen de laquelle le fluide de lavage en mode de lavage peut être guidé à travers le corps de soupape (112) de la deuxième soupape (100, 102), et **en ce que** la première soupape (104, 106) est en liaison avec la tige conduisant le fluide de lavage.

10. Dispositif selon la revendication 8, **caractérisé en ce que** la position de la deuxième soupape (100, 102) peut être modifiée par une tige de soupape (110) non reliée à son corps de soupape (112), **en ce que** cette tige de soupape est réalisée comme une tige conduisant le fluide de lavage, au moyen de laquelle le fluide de lavage en mode de lavage peut être guidé à travers le corps de soupape (112), et **en ce que** la première soupape (104, 106) est en liaison avec la tige conduisant le fluide de lavage.

11. Dispositif selon la revendication 9 ou 10, **caractérisé en ce que** la tige conduisant le fluide de lavage est réalisée comme tige creuse.
